# EUROPÄISCHE PATENTSCHRIFT

(11) **EP 0 914 271 B1**
(45) Veröffentlichungstag und Bekanntmachung des Hinweises auf die Patenterteilung: **09.08.2000**
(21) Anmeldenummer: 97931684.1
(22) Anmeldetag: 26.06.1997
(51) Int. Cl.: B62D 65/00

(54) **VERFAHREN ZUR HERSTELLUNG EINES VORGEFERTIGTEN KRAFTFAHRZEUGTÜRMODULS**
PROCESS FOR MANUFACTURING A PREFABRICATED VEHICLE DOOR MODULE
PROCEDE DE FABRICATION D'UN MODULE PREFABRIQUE DE PORTE DE VEHICULE

(30) Priorität: 28.06.1996 DE 19625974
(43) Veröffentlichungstag der Anmeldung: 12.05.1999
(73) Patentinhaber: Brose Fahrzeugteile GmbH & Co. KG, 96450 Coburg (DE)
(72) Erfinder: SEEBERGER, Jürgen, D-96148 Baunach (DE)
(74) Vertreter: Baumgärtel, Gunnar
(86) Internationale Anmeldenummer: DE9701364
(87) Internationale Veröffentlichungsnummer: WO9800329

(56) Entgegenhaltungen:
- US-A- 4 824 164
- US-A- 4 848 829
- US-A- 5 095 659

## Beschreibung

Die Erfindung betrifft ein Verfahren zur Herstellung eines vorgefertigten Kraftfahrzeugtürmoduls gemäß dem Oberbegriff des Patentanspruchs 1.

Aus der US-A-4 882 842 ist eine modular aufgebaute Fahrzeugtür und ein Verfahren zu ihrer Herstellung bekannt, wobei eine Montageplatte zur Aufnahme mechanischer und/oder elektrischer Komponenten vorgesehen ist. Die Ausrüstung der Montageplatte erfolgt in einer Vormontagelinie bevor diese an die Hauptmontagelinie des Fahrzeugs geliefert wird, um in die Tür eingebaut zu werden.

Die Trägerplatte soll aus wenigstens einer durch Spritzgießen hergestellten Schicht bestehen und einen Antrieb für einen Fensterhebermechanismus tragen. Darüber hinaus kann die Trägerplatte auch den Verriegelungsmechanismus, ein Elektronikmodul, Schalter und elektrische Kabel aufweisen, die Vertiefungen, Führungen oder Positionierungswänden zugeordnet sind.

Aus der US-A-4 943 109 ist eine modular aufgebaute Kraftfahrzeugtür mit einer Trägerplatte bekannt, bei der auf der Trägerplatte ein Kabelbaum mit elektrischen Steckern angeordnet ist, deren passfähige elektrische Steckverbindungen eines steifen Türkörpers zugeordnet sind. Diese Steckverbindungen stehen mit einer Vielzahl von elektrischen Komponenten in Verbindung, die am Türkörper befestigt sind. Bei der Montage der Trägerplatte an die Rahmenstruktur der Tür kommt es zum Eingriff der sich gegenüberliegenden Steckerelemente, wobei die Stecker der Trägerplatte eine seitliche Relativbewegung ausführen können, um einen Toleranzausgleich herzustellen.

Der Erfindung liegt die Aufgabe zugrunde, die Herstellung von vorgefertigten Türmodulen für Kraftfahrzeugtüren, die mit mehreren elektrischen Komponenten ausgerüstet sind, zu effektivieren und somit die Produktionskosten zu senken.

Erfindungsgemäß wird die Aufgabe durch die Merkmale des Anspruchs 1 gelöst.

Die für die Ausrüstung des jeweiligen Türmoduls benötigten elektrischen Leitungen beziehungsweise Kabel werden sequenzgenau in einer der Hauptmontagelinie nebengeordneten Kabel-fertigungslinie konfektioniert. Die Kabel werden dem jeweiligen Türmodul vorzugsweise satzweise zugeführt und dann verbaut. Eine elektronische Datenverarbeitungsanlage steuert die Hauptmontagelinie der Türmodule und die Kabelfertigungslinie. Die genaue Abstimmung der Kabelfertigung auf den Bedarf der Türmodulvarianten ist seinem Zeitpunkt nach und der Reihenfolge nach für ein erfolgreiches Durchführen des Verfahrens unerläßlich.

Bei einer solchen, der Erfindung gemäßen Verfahrensweise bietet es sich an, die elektrischen Leitungen als Einzelverbindungen zwischen den zu verbindenden elektrischen Komponenten vorzusehen, das heißt die elektrischen Leitungen werden nicht zu komplexen Kabelbäumen zusammengefaßt, wie das heute im allgemeinen üblich ist. Durch den Ersatz von Kabelbäumen durch vorort hergestellte Einzelverbindungen wird teuere manuelle Arbeit und Material (im allgemeinen Bandagen zum Umwickeln der Leitungsstränge) eingespart.

Die Konfektionierung der benötigten elektrischen Leiter beziehungsweise Kabel umfaßt im wesentlichen folgende Schritte: zunächst werden an den Anfang der Kabelfertigungslinie die zuvor festgelegten Kabelsorten, zum Beispiel unterschieden nach dem Leitungsquerschnitt der Anzahl der Litzen und der Farbe, bereitgestellt. Die Kabelenden werden eine Konfektionierungsautomaten zugeführt, der die benötigten Leitungsstücke ablenkt und die Leitungsenden zur Kontaktierung auf dem Türmodulträger vorbereitet. Das heißt, daß in Abhängigkeit von der gewählten Kontaktierungsart, zum Beispiel Löten, Ultraschallschweißen oder Stecken, die Leitungsenden verzinnt, verdichtet beziehungsweise mit einem Stecker versehen werden.

Die Bereitstellung der so vorbereiteten Kabel zur Montage an die Hauptmontagelinie der Türmodule kann gemäß einer Variante der Erfindung unmittelbar aus der Kabelkonfektionierungsvorrichtung heraus erfolgen, wodurch die Kabelfertigungslinie sehr kurz gehalten werden kann. Sofern ein Montageautomat die Verlegung und Kontaktierung der Kabel auf dem Türmodulträger übernehmen soll, muß die Übergabe der Kabel von der Konfektionierungsvorrichtung sicher stellen, daß der Montageautomat immer auf das bezüglich der elektrischen Komponenten passende Kabel zugreift. Zu diesem Zweck können beispielsweise die konfektionierten Kabel auf einem in Sektoren unterteilten Vorhaltetablett abgelegt werden, wobei jedem Sektor ein bestimmtes Kabel zugeordnet ist. Wenn darüber hinaus die Kabelenden in vorbestimmten Positionen fixiert werden, stellt dies einen problemlosen Zugriff des Montageautomaten sicher.

Natürlich kann das erfindungsgemäße Verfahren auch in zwei parallel zueinander laufenden Fertigungslinien durchgeführt werden, wobei die Bestückung der Türmodule mit den einzelnen Funktionssystemen, insbesondere mit den elektrischen Komponenten, und die Kabelfertigung solange parallel laufen, bis ein vollausgerüstetes Türmodul und ein kompletter Kabelsatz zur Verfügung stehen und zusammengeführt werden können.

Für welche der ausgewählten Verfahrensvarianten man sich entscheiden sollte, kann nur unter Beachtung der Gesamtkonzeption der Anlage entschieden werden. Eine besondere Bedeutung kommt dabei dem langsamsten Verfahrensschritt zu. Für den Fall, daß beispielsweise die Leistungsfähigkeit der Kabelkonfektionierung und der Kabelmontage doppelt so groß ist wie die Leistungsfähigkeit der Bereitsstellung von Türmodulen mit vormontierten Komponenten, könnte die Kabel-fertigungslinie zwei parallele Hauptmontagelinien bedienen.

Die Kontaktierung der Kabelenden mit den zugeordneten elektrischen Komponenten erfolgt vorzugsweise aus einer einheitlichen und im wesentlichen senkrecht zur Ebene der Trägerplatte verlaufenden Montagerichtung. Entsprechend sind die Kontaktierungsstellen der elektrischen Komponenten vorbereitet. Eine Türelektronik, die in die Antriebseinheit für einen elektrischen Fensterheber integriert sein kann, dient vorzugsweise zur zentralen Versorgung der elektrischen Komponenten mit Energie und gegebenenfalls mit Signalen. Die Elektronikeinheit selbst wird von einem Hauptkabelstrang versorgt, an dessen Hauptsteckverbinder das Bordnetz des Fahrzeugs anschließbar ist. Bei Ausführung des Hauptkabelstrang in Multiplextechnik kann man die Anzahl der Leitungen wesentlich verringern. Obwohl der Einsatz mehrerer unterschiedlicher Konfektionierungstechniken zum Beispiel, Löten, Ultraschallschweißen und Stecken, die Fertigung im Vergleich zur Anwendung nur einer einzigen Kontaktierungstechnik verteuert, kann dies bei Betrachtung auch anderer Aspekte, wie beispielsweise der Servicefreundlichkeit, dennoch von Vorteil sein. So sind unter anderem folgende Konzepte denkbar:
(a) Die Kontaktierung der Kabel mit den elektrischen Komponenten erfolgt durch eine kostengünstige, an sich nicht lösbare Verbindungstechnik, zum Beispiel durch Löten, während die anderen Leitungsenden mittels Steckverbinder an die Elektronikeinheit angeschlossen werden. Bei einem Ausfall einer elektrischen Komponente würde diese mit dem Kabel ausgewechselt.
(b) Im umgekehrten Fall, also wenn sämtliche Kabel mit der Elektronikeinheit verlötet und die den elektrischen Komponenten zugeordneten Kabelenden mit Steckverbindern versehen sind, bleibt das Kabel beim Auswechseln einer elektrischen Komponente erhalten. Allerdings wären beim Ausfall der Elektronikeinheit alle Kabel verloren.
(c) Ausgehend von der Variante (b) kann man auch die Lötverbindungen an der Elektronikeinheit durch Verbindungen mit Schneid/Klemmtechnik ersetzt. Allerdings ist sicherzustellen, daß die elektrischen Verbindungen vor Feuchtigkeit geschützt sind.

Nachfolgend wird die Erfindung anhand von Ausführungsbeispielen und den dargestellten Figuren näher erläutert. Es zeigen:
- Figur 1A -: eine schematische Darstellung des Fertigungsablauf 5 eines Türmoduls mit einer Kabelkonfektionierungsvorrichtung, die mehrere Kabelsorten verarbeitet;
- Figur 1B -: eine schematische Darstellung des Fertigungsablauf 5 eines Türmoduls mit drei Kabelkonfektionierungsvorrichtungen, die jeweils nur eine Kabelsorte verarbeiten;
- Figur 1C -: eine schematische Darstellung des Fertigungsablaufs eines Türmoduls mit nur einer Konfektionierungsvorrichtung, die die benötigten Kabel unmittelbar vor ihrer Montage auf das Türmodul zur Verfügung stellt;
- Figur 2 -: eine schematische Darstellung einer Schneid/Klemmverbindung mit vier in einem Halteelemente zusammengefaßten Kabelenden an eine Elektronikeinheit;
- Figur 3 -: eine schematische Darstellung der Draufsicht auf Figur 2, jedoch mit zusätzlich angeschlossenem Hauptkabel;
- Figur 4 -: eine schematische Darstellung der Ausrichtung der Kontaktelemente eines Steckverbinders bezüglich der Trägerplatte des Türmoduls.

Der Trend zur Modultechnik hat im Fahrzeugbau zu einer starken Reduzierung der Anzahl der im Automobilwerk zu verbauenden Einheiten geführt. Im gleichen Maße aber wurden diese Einheiten komplexer und zum Teil von außerordentlich großer Variantenvielfalt. Diese Entwicklung prägt besonders den Aufbau moderner Türkonzepte. So kann eine Fahrzeugtür heute im wesentlichen aus der Türkarrosserie, einem Türmodul mit einer Vielzahl von funktionellen Einheiten (Fensterheber, Schloß, elektronisches Steuergerät, Lautsprecher usw.) und der Türinnenverkleidung bestehen, wenn man einmal von der Fensterscheibe und dem Türaußenspiegel absieht.

Aufgrund der Vielzahl der auf dem Türmodul vorzumontierenden Komponenten und der unterschiedlichen Ausstattungswünsche der Konsumenten entsteht durch Kombination eine große Anzahl von Türmodulvarianten. Das gleiche gilt für die Variantenvielfalt der Kabelbäume, die man versucht durch das Angebot von Ausstattungspaketen zu reduzieren. Abweichungen von den Ausstattungspaketen führen meist dazu, daß eine oder mehrere Leitungen des Kabelbaums ungenutzt bleiben. Die Verkabelung der elektrischen Komponenten verursacht einen vergleichsweise großen Anteil an den Gesamtkosten des Türmoduls.

Durch die Erfindung werden die Voraussetzungen für eine effizientere Fertigung von Türmodulen bei großer Variantenvielfalt und gleichzeitig sparsamen Umgang mit Materialen geschaffen. Danach wird ein möglichst großer Teil der elektrischen Leitungen in einer der Hauptmontagelinie der Türmodule nebengeordneten Kabelfertigungslinie konfektioniert und auf kürzestem Wege montiert.

Die nachfolgend beschriebenen Ausführungsbeispiele können nur einen Teil der möglichen Varianten des Erfindungsprinzips angeben. Auf die unter Fachkundigen bekannten Details der Kabelfertigung und der Kabelkontaktierung mit den zugeordneten Kontaktstellen der elektrischen Komponenten wird hier nicht näher eingegangen.

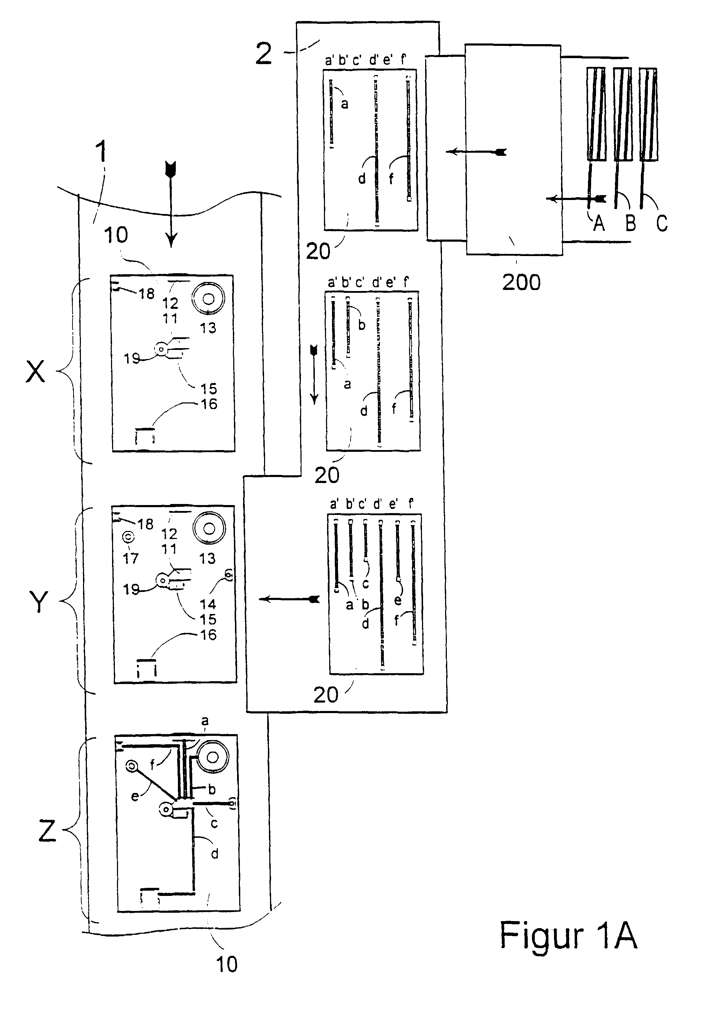

Gemäß Figur 1A ist eine Hauptmontagelinie 1 vorgesehen, in der die Ausrüstung einer aus Metall oder Kunststoff bestehenden Trägerplatte 10 mit den elektrischen Komponenten 12 bis 18 erfolgt. Parallel dazu arbeitet eine Kabelfertigungslinie 2 und stellt sequenzgenau zur Türmodulfertigung die benötigten elektrischen Leitungen a bis f an die Hauptmontagelinie zur Verfügung.

Am Anfang der Kabelfertigungslinie 2 steht der Zugriff auf die auf Kabeltrommeln oder dergleichen zur Verfügung stehenden Kabelsorten A, B, C, die sich bespielsweise in Material, Leiterquerschnitt, Farbe und anderem unterscheiden können. Nach dem Ablängen in der Konfektionierungsvorrichtung erfolgt die Vorbereitung der Leitungsenden zur Kontaktierung mit der Elektronikeinheit 11 oder einer der elektrischen Komponenten 12 bis 18. Dazu wird jedes Kabelende entsprechend der vorgesehenen Kontaktierungsart (zum Beispiel Löten, Ultraschallschweißen, Stecken) entweder verzinnt, verdichtet beziehungsweise mit einem Steckverbinder versehen. Anschließend werden die so zur Montage vorbereiteten elektrischen Leitungen a bis f auf einem Kabeltablett 20 abgelegt, und zwar so, daß jede spezielle elektrische Leitung a bis f einem zugehörigen spaltenartigen Sektor a' bis f' zugeordnet wird, damit eine systematische Montage (von Hand oder automatisch) gewährleistet werden kann. Vorzugsweise sind die vorzubereitenden Leitungsenden an zuvor festgelegten Positionen exakt gehalten, um einen einfachen Zugriff eines Montageautomaten zu ermöglichen.

Die Steuerung der Kabelfertigungslinie 2 erfolgt vorzugsweise durch dieselbe EDV-Anlage, die die Türmodulfertigung der Hauptmontagelinie steuert, schließlich müssen die notwendigen Produktdaten beider Fertigungslinien 1, 2 bezüglich Menge, Ausführung und Montagezeitpunkt exakt aufeinander abgestimmt sein. Gemäß dem beschriebenen Ausführungsbeispiel von Figur 1A stimmt die Taktfrequenz der Bereitstellung eines Kabelsatzes mit der Taktfrequenz der Türmodulfertigung überein. Das heißt, der in der Ebene X schematisch dargestellte Kabelsatz bestehend aus den elektrischen Leitungen A, B, D, F ist für das Türmodul 10 der gleichen Ebene X bestimmt, um die elektrischen Komponenten, (Tieftöner 13, Zentralverriegelung 16 und Türaußenspiegel 18) mit der Elektronikeinheit 11 zu verbinden. Die elektrische Leitung A stellt die Verbindung (vorzugsweise in Multiplex-Technik) zwischen der Elektronikeinheit und einem Hauptsteckverbinder 12 her, der die Tür an einer Energiequelle und einer zentralen Bordelektronik anschließt.

Das Türmodul 10 und das Kabeltablett 20 der Ebene Y weisen einen höheren Ausstattungsgrad auf. Zusätzlich sind eine Fußraumleuchte 14 und eine Hochtöner 17 vorgesehen, die mittels der elektrischen Leitungen C und E an die Elektronikeinheit angeschlossen werden. Die Ebene Z zeigt am Ende der Türmodulfertigung ein komplett vormontiertes Türmodul, dessen Ausstattungsgrad dem von der Ebene Y entspricht.

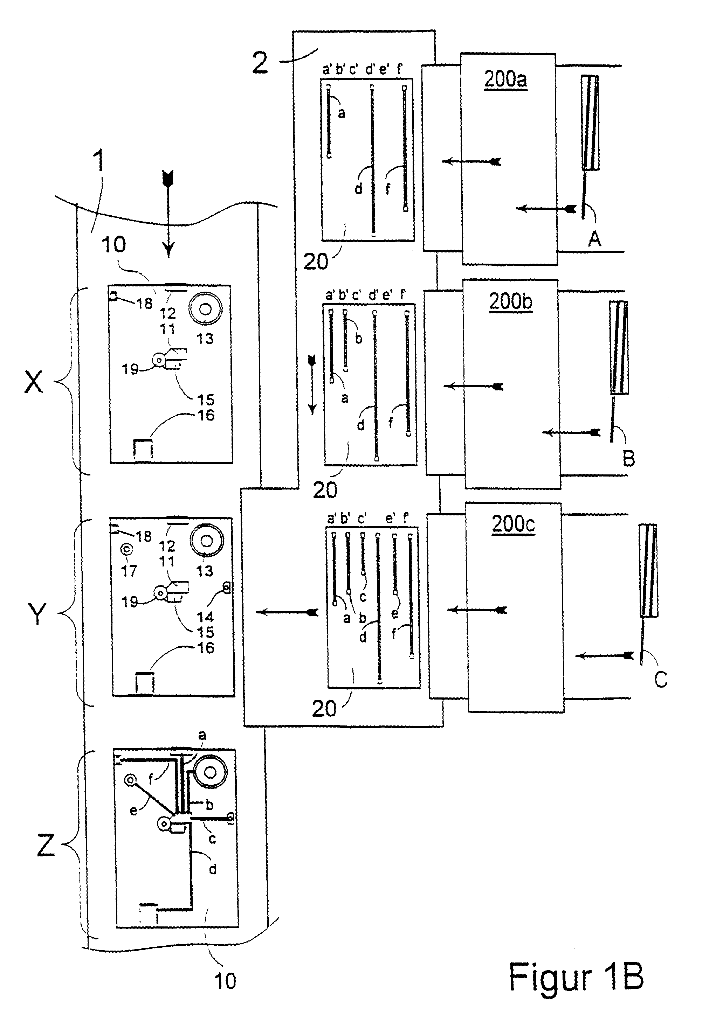

Das Ausführungsbeispiel von Figur 1B unterscheidet sich von dem voranbeschriebenen im wesentlichen dadurch, daß drei Konfektionierungsvorrichtungen 200a, 200b, 200c in der Kabelfertigungslinie 2 vorgesehen sind, wobei jede nur eine Kabelsorte A, B, C verarbeitet. Demnach produziert die Vorrichtung 200a die elektrischen Leitungen a, d, f aus der Kabelsorte A, die Vorrichtung 200b die elektrische Leitung b und die Vorrichtung 200c in der Ebene Y die elektrische Leitung e. Eine solche anlagentechnische Variante scheint dann vorteilhaft zu sein, wenn sich die Kabelsorten A, B, C sehr stark unterscheiden, zum Beispiel Rundkabel und Flachbandkabel und/oder die Vorbereitung der Kabelenden von unterschiedenlicher Technologie ist (Löten und Stecken) und/oder der Ausstoß nur einer Konfektionierungsvorrichtung 200 den Bedarf der Hauptmontagelinie 1 nicht decken kann.

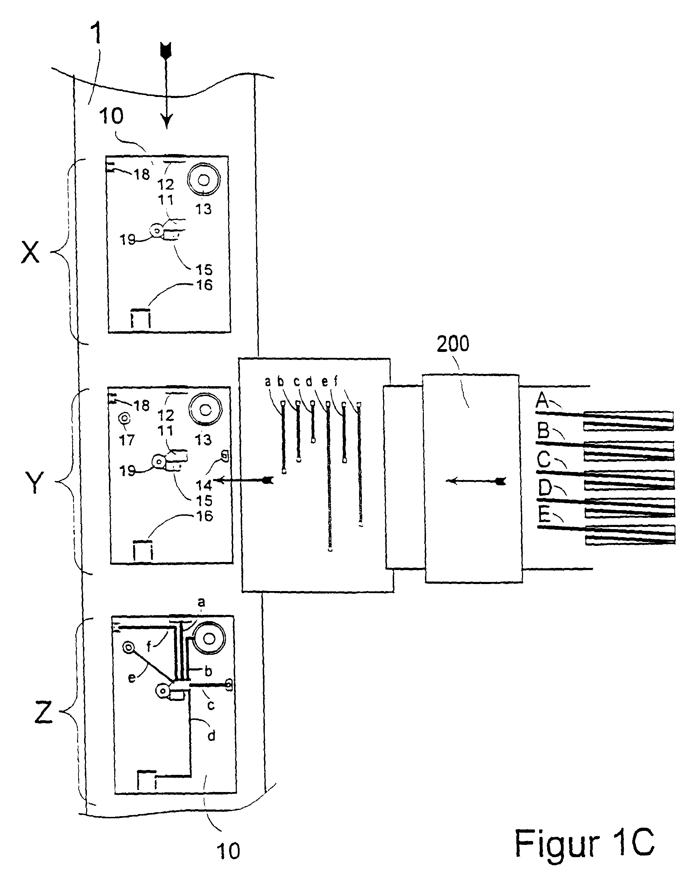

Das dritte Ausführungsbeipiel (siehe Figur 1C) unterscheidet sich von dem gemäß Figur lA dadurch, daß die Konfektionierungsvorrichtung 200 die fertig gestellten Kabel a bis f nicht auf ein Kabeltablett 20 ablegt, sondern diese sofort an die Hauptmontagelinie 1 zur Verfügung stellt. Vorzugsweise ist in die Konfektionierungsvorrichtung 200 ein (nicht dargestellter) Montageautomat integriert, der die Kabel a bis f unmittelbar nach ihrer Konfektionierung an die elektrischen Komponenten 11 bis 18 anschließt. Die Vorrichtung 200 verarbeitet fünf verschiedene Kabelsorten A bis E. Eine solche Anlagenstruktur kann dann vorteilhaft angewendet werden, wenn die Montagezeit für eine elektrische Leitung a bis f etwa mit der Zeit übereinstimmt, die für die Konfektionierung der nächsten elektrischen Leitung benötigt wird.

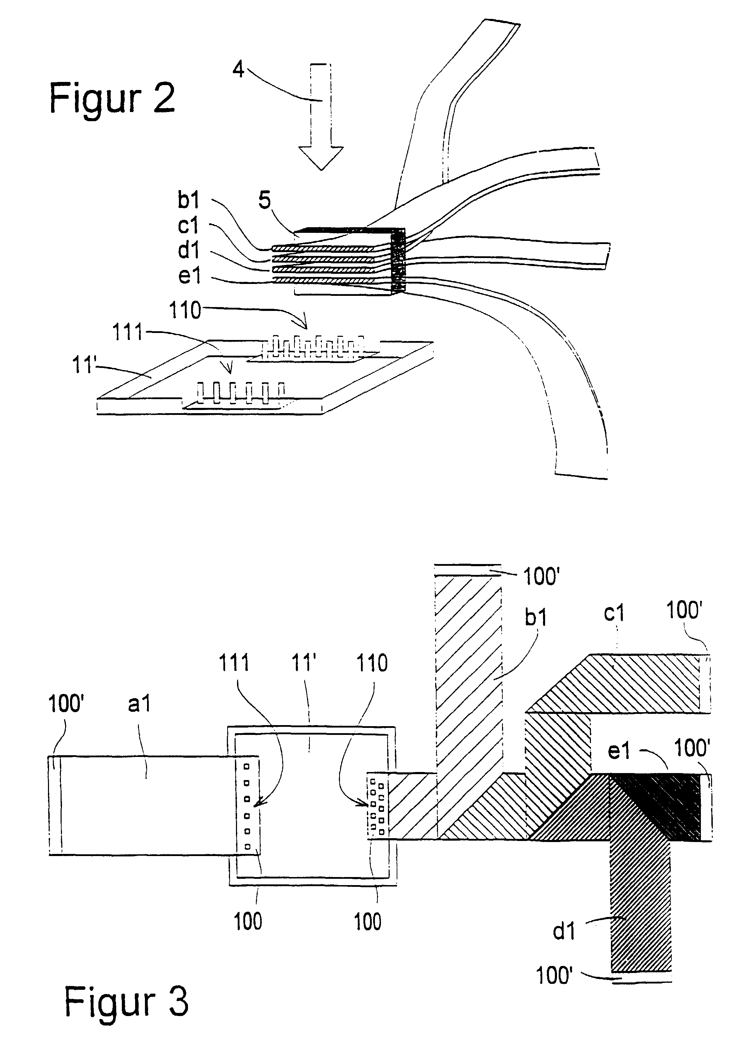

Mit den Figuren 2 und 3 soll darauf hingewiesen werden, daß man bei Verwendung der Schneid/Klemmtechnik die Elektronikeinheit 11' an einer Kontaktstelle (Schneidkontakte 110) mit mehreren Leitungsenden 100 kontaktieren kann. Dazu werden die Leitungen bl bis el entweder nacheinander oder zusammengefaßt durch ein Halteelement 5 in der Montagerichtung 4 quer zur Ebene der Trägerplatte 10 in den Bereich der Schneidkontakte 110 gedrückt. Voraussetzung für die Anwendung dieser Mehrlagentechnologie ist natürlich die Abstimmung der Lage der Einzelleiter der Kabel bl bis el untereinander sowie der einzelnen Schneidkontakte 110. Als Halteelement 5 kann ein clipsbares, klammerartiges Teil zum Einsatz kommen, das die Leitungsenden zueinander fixiert, aber auch eine Kunststoffumspritzung ist anwendbar.

Aus Figur 3 ist ersichtlich, daß die anderen Schneidkontakte 111 das Leitungsende 100 des Hauptkabels al kontaktieren, das mit dem Leitungsende 100' am Hauptsteckverbinder 12 (siehe Figur 1A) angeschlossen werden soll. Die Leitungsenden 100' der Kabel b1 bis d1 werden an den elektrischen Komponenten 13, 14, 16, 18 angeschlossen.

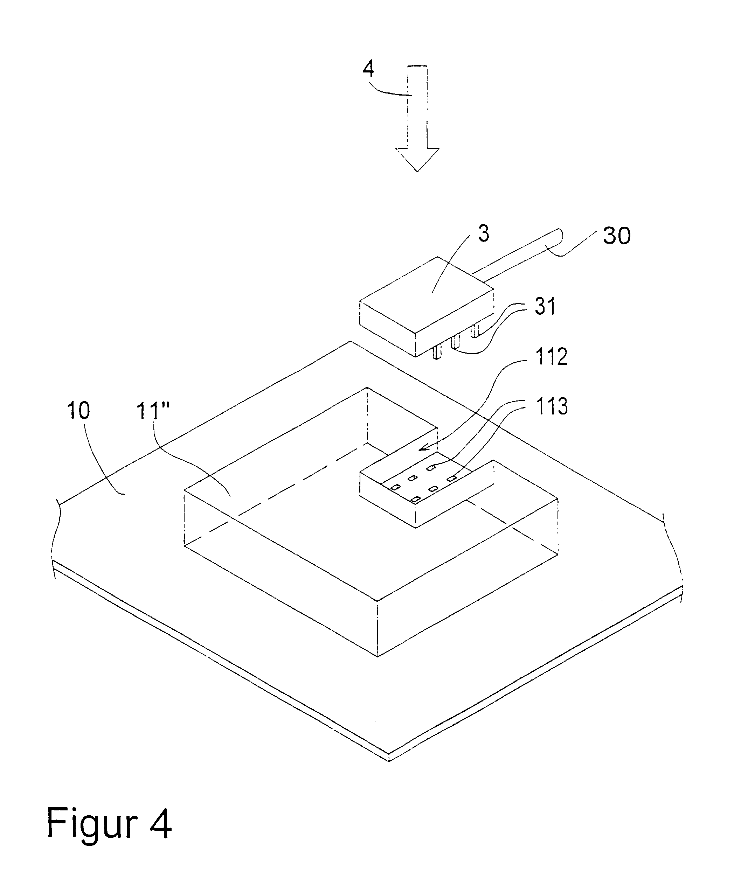

Die Darstellung von Figur 4 zeigt schematisch Ausschnitte einer Trägerplatte 10 und einer Elektronikeinheit 11" mit einer Steckerkuplung 112 zur Aufnahme des Steckers 3, der mit einem Kabel 30 verbunden ist. Der Pfeil 4 verdeutlicht noch einmal die Montagerichtung, die im wesentlichen orthogonal zur Ebene der Trägerplatte 10 und für alle Kontaktierungsstellen einheitlich verlaufen soll, um komplizierte Montagevorgänge und die damit verbundenen Probleme und Kosten auszuschließen. Die Steckkontakte 31, 113 können natürlich auch zwischen der Elektronikeinheit 11'' und im Stecker 3 ausgetauscht werden.

Um eine geringe Fehlerquote garantieren zu können, sollte jedes Türmodul, das die Fertigung verläßt, in einer Prüfvorrichtung einen Funktionstest sämtlicher Komponenten unterzogen werden. Das gilt auch für solche Komponenten (wie zum Beispiel für den Türaußenspiegel), der noch nicht mit der elektronischen Steuereinheit verbunden ist. An diese Stelle kann in der Prüfvorrichtung auch ein elektrisches Meßinstrument treten.

### Bezugszeichenliste

- 1: Hauptmontagelinie
- 10: Trägerplatte
- 11: elektrische Komponente, Elektronikeinheit
- 11': elektrische Komponente, Elektronikeinheit
- 11": elektrische Komponente, Elektronikeinheit
- 12: Hauptsteckverbinder
- 13: Tieftöner
- 14: Fußraumleuchte
- 15: Elektromotor
- 16: Schloß mit Zentralverriegelung
- 17: Hochtöner
- 18: Steckverbinder für Außenspiegel
- 19: Getriebe

- 100: Leitungsende
- 100': Leitungsende
- 110: Schneidkontakte
- 111: Schneidkontakte
- 112: Steckerkupplung
- 113: Steckkontakte

- 2: Kabelfertigungslinie
- 20: Kabeltablett
- 200: Konfektionierungsvorrchtung
- 200A: Konfektionierungsvorrchtung
- 200B: Konfektionierungsvorrchtung
- 200C: Konfektionierungsvorrchtung

- 3: Stecker
- 30: Kabel
- 31: Steckkontakte

- 4: Montagerichtung

- 5: Halteelement

- a: Elektrische Leitung/Kabelstrang (Multiplexausführung)
- a1: Elektrische Leitung/Kabelstrang (Multiplexausführung)
- b: Elektrische Leitung/Kabelstrang
- b1: Elektrische Leitung/Kabelstrang
- c: Elektrische Leitung/Kabelstrang
- c1: Elektrische Leitung/Kabelstrang
- d: Elektrische Leitung/Kabelstrang
- d1: Elektrische Leitung/Kabelstrang
- e: Elektrische Leitung/Kabelstrang
- f: Elektrische Leitung/Kabelstrang

- a': Sektor des Kabeltabletts
- b': Sektor des Kabeltabletts
- c': Sektor des Kabeltabletts
- d': Sektor des Kabeltabletts
- e': Sektor des Kabeltabletts
- f': Sektor des Kabeltabletts

- A: Kabelvorrat der Güte A
- B: Kabelvorrat der Güte B
- C: Kabelvorrat der Güte C
- D: Kabelvorrat der Güte D
- E: Kabelvorrat der Güte E

- X: Ebene
- Y: Ebene
- Z: Ebene

## Patentansprüche

1. Verfahren zur Herstellung eines vorgefertigten Kraftfahrzeugtürmoduls mit einer Elektronikeinheit (11) und mehreren elektrischen Komponenten, wie z.B. Fensterhebermotor, Zentralverriegelung, Spiegelverstellung und -heizung, Schalter, Leuchten, Lautsprecher, Sidebag und/oder dergleichen, wobei in einer Hauptmontagelinie (1) die Ausrüstung der Trägerplatte (10) mit den für eine bestimmte Fahrzeugtür vorgesehenen elektrischen Komponenten und deren Verkabelung mittels elektrischer Leitungen erfolgt,
**dadurch gekennzeichnet**,
daß zumindest ein Teil der elektrischen Leitungen (a, b, c, d, e, f, a1, b1, c1, d1, e1) als Einzelleiterverbindungen in einer nebengeordneten Kabel-Fertigungslinie (2) sequenzgenau zur Türmodulfertigung in einer Konfektionierungsvorrichtung (200) vorkonfektioniert und in einer Hauptmontagelinie (1) unmittelbar auf das Türmodul unabhängig voneinander angeordnet werden.

2. Verfahren nach Anspruch 1, **dadurch gekennzeichnet**, daß die elektrischen Einzelleiterverbindungen (a, b, c, d, e, f) zwischen der Elektronikeinheit (11) und den zugeordneten elektrischen Komponenten (12, 13, 14, 15, 16, 17, 18) vorgesehen sind und daß die elektrischen Leitungen (a, b, c, d, e, f) in der Kabel-Fertigungslinie (2) von einem Endlosvorrat (A, B; C; D; E) bestimmter Güte (Leitermaterial, Leiterquerschnitt, Anzahl der Litzen, Isoliermaterial, Farbe u.a.) auf Länge abgetrennt werden und daß die Leitungsenden zur Kontaktierung mit der Elektronikeinheit (11) bzw. der zugeordneten elektrischen Komponente Komponenten (12, 13, 14, 15, 16, 17, 18) vorbereitet werden.

3. Verfahren nach wenigstens einem der Ansprüche 1 und 2, **dadurch gekennzeichnet**, daß die Leitungsenden (100) für eine Kontaktierung unter Einsatz von Mitteln der Schneid-Klemm-Technik, der Ultraschweißtechnik oder der Löttechnik vorbereitet werden.

4. Verfahren nach wenigstens einem der Ansprüche 1 und 2, **dadurch gekennzeichnet**, daß die Leitungsenden mit elektrischen Steckverbindern versehen werden, deren Steckelemente im wesentlichen orthogonal zur Ebene der Trägerplatte ausgerichtet sind.

5. Verfahren nach wenigstens einem der voranstehenden Ansprüche, **dadurch gekennzeichnet**, daß ein Leitungsende eines jeden elektrischen Leiters mit einer ansich festen Verbindungstechnik, z.B. Löten oder Ultraschallschweißen, an die Elektronikeinheit oder die elektrische Komponente und das andere Leitungsende mit einer lösbaren Steckerverbindung angeschlossen wird.

6. Verfahren nach wenigstens einem der voranstehenden Ansprüche, **dadurch gekennzeichnet**, daß die Kontaktierung der Leitungsenden mit der Elektronikeinheit (11, 11', 11'') bzw. der zugeordneten elektrischen Komponente Komponenten (12, 13, 14, 15, 16, 17, 18) durch einen Montageautomaten erfolgt, wobei die Montagerichtung (4) im wesentlichen orthogonal zur Ebene der Trägerplatte (10) verläuft.

7. Verfahren nach wenigstens einem der voranstehenden Ansprüche, **dadurch gekennzeichnet**, daß der Hauptkabelstrang (a, a1) der Elektronikeinheit (11, 11') in Multiplex-Technik ausgeführt ist und mit einer Fahrzeugelektronik sowie einer Energiequelle in Verbindung steht.

8. Verfahren nach wenigstens einem der voranstehenden Ansprüche, **dadurch gekennzeichnet**, daß die der Elektronikeinheit (11') zugeordneten Leitungsenden (b1, c1, d1, e1) von wenigstens zwei elektrischen Komponenten in einem Halteelement (5) zusammengefaßt und positioniert werden bevor ihre Kontaktierung mit dem vorgesehenen Kontaktierungsbereich (110) der Elektronikeinheit (11') erfolgt.

9. Verfahren nach wenigstens einem der voranstehenden Ansprüche, **dadurch gekennzeichnet**, daß nach der Herstellung der Leitungsverbindungen zwischen der Elektronikeinheit (11, 11', 11'') und den elektrische Funktionskomponenten Komponenten (12, 13, 14, 15, 16, 17, 18) in einer Prüfvorrichtung eine Funktionsprüfung erfolgt.

10. Verfahren nach wenigstens einem der voranstehenden Ansprüche, **dadurch gekennzeichnet**, daß zur Funktionsprüfung noch freier Leitungsenden, die noch nicht mit der elektrischen Komponente (z.B. der elektrisch verstell- und beheizbare Außenspiegel) verbunden sind, diese an zugeordnete Prüfverbinder einer Testvorrichtung angeschlossen werden und anschließend der Prüfvorgang ausgeführt wird.

## Claims

1. Process for manufacturing a prefabricated vehicle door module having an electronics unit (11) and several electrical components, such as e.g. window lifter motor, central locking, mirror adjustment and heating, switches, lights, speakers, sidebag and/or the like wherein the fitting out of the support plate (10) with the electrical components provided for a specific vehicle door and with the cabling for same by means of electric leads is carried out in a main assembly line (1) characterised in that at least a part of the electric leads (a, b, c, d, e, f, a1, b1, c1, d1, e1) is prefabricated in a manufacturing device (200) as individual conductor connections in a secondary cable production line (2) alongside and in precision sequence with the door module production and are mounted independently of each other directly on the door module in a main assembly line (1).

2. Process according to claim 1 characterised in that the individual electrical conductor connections (a, b, c, d, c, e, f) are provided between the electronics unit (11) and the associated electrical components (12, 13 ,14 15, 16, 17, 18) and that the electric leads (a, b, c, d, e, f) are cut to length in the cable production line (2) from an endless supply (A, B, C, D, E) of certain material quality (conductor material, conductor cross-section, number of strands, insulating material, colour etc) and that the lead ends are prepared for contacting with the electronics unit (11) or the associated electrical components (12, 13, 14, 15, 16, 17, 18).

3. Process according to at least one of claims 1 and 2 characterised in that the lead ends (100) are prepared for contacting by using means employed in cut and clamp technology, ultra-welding technology or soldering technology.

4. Process according to at least one of claims 1 and 2 characterised in that the lead ends are provided with electric plug connectors whose plug elements are aligned substantially orthogonal to the plane of the support plate.

5. Process according to at least one of the preceding claims characterised in that one lead end of each electrical conductor is connected by an inherently fixed connecting method e.g. soldering or ultrasound welding to the electronics unit or the electrical components and the other lead end is connected by a detachable plug connection.

6. Process according to one of the preceding claims characterised in that the contacting of the lead ends with the electronics unit (11, 11', 11'') or the associated electrical components (12, 13, 14 15, 16, 17, 18) is carried out by an automated assembly machine wherein the assembly direction (4) runs substantially orthogonal to the plane of the support plate (10).

7. Process according to at least one of the preceding claims characterised in that the main cable strand (a, a1) of the electronics unit (11, 11') is designed with multiplex technology and is connected to the vehicle electronics and to an energy source.

8. Process according to at least one of the preceding claims characterised in that the lead ends (b1, c1, d1, e1) of at least two electrical components associated with the electronics unit (11') are combined into one holding element (5) and positioned before their contact is made with the proposed contacting area (110) of the electronics unit (11').

9. Process according to at least one of the preceding claims characterised in that after producing the lead connections between the electronics unit (11, 11', 11'') and the electrical function components (12, 13, 14 15, 16, 17, 18) a function check is carried out in a test machine.

10. Process according to at least one of the preceding claims characterised in that for a functional check on the still free lead ends which have not yet been connected to the electrical components (e.g. the electrically adjustable and heated outside mirror), these are connected to an associated test connector of a testing machine and the testing process is then carried out.

## Revendications

1. Procédé pour fabriquer un module préfabriqué de portière de véhicule automobile, comportant une unité électronique (11) et plusieurs composants électriques, comme par exemple un moteur de lève-glace, un système de verrouillage central, un système de réglage et de chauffage de miroir, des interrupteurs, des lampes, des haut-parleurs, un airbag latéral et/ou analogues, selon lequel l'équipement de la plaque de support (17) avec les composants électriques prévus pour une portière déterminée de véhicule et leur câblage à l'aide de conducteurs électriques s'effectuent dans une chaîne de montage principale (1),
caractérisé en ce
qu'au moins une partie des conducteurs électriques (a, b, c, d, e, f, a1, b1, c1, d1, e1) sont préfabriqués en tant que liaisons à conducteurs individuels dans une chaîne (2) de fabrication de câbles, disposée à côté, et ce selon une séquence précise pour la fabrication de modules de portières dans un dispositif de fabrication (200), et sont disposés directement sur le module de portière, indépendamment les uns des autres, dans une chaîne de montage principale (1).

2. Procédé selon la revendication 1, caractérisé en ce que les liaisons électriques à conducteurs individuels (a, b, c, d, e, f) prévues entre l'unité électronique (11) et les composants électriques associés (12, 13, 14, 15, 16, 17, 18) et que dans la chaîne (2) de fabrication de câbles, les conducteurs électriques (a, b, c, d, e, f) sont coupés à longueur à partir d'une réserve sans fin (A; B; C; D; E) de qualité déterminée (matériau des conducteurs, section transversale des conducteurs, nombre des torons, matériau isolant, couleur et autres) et que les extrémités des conducteurs sont préalablement traitées pour l'établissement du contact avec l'unité électronique (11) ou avec des composants électriques associés (12, 13, 14, 15,16, 17, 18).

3. Procédé selon au moins l'une des revendications 1 et 2, caractérisé en ce qu'on applique un traitement préalable aux extrémités (100) des conducteurs sont préparées pour l'établissement d'un contact, moyennant l'utilisation de moyens de la technique de serrage-découpage, de la technique utilisant les ultrasons ou de la technique de brasage.

4. Procédé selon au moins l'une des revendications 1 et 2, caractérisé en ce que l'on équipe les extrémités des conducteurs avec des connecteurs électriques dont les éléments de connexion sont orientés essentiellement perpendiculairement au plan de la plaque de support.

5. Procédé selon au moins l'une des revendications précédentes, caractérisé en ce qu'on raccorde une extrémité de chaque conducteur électrique au moyen de la technique de connexion fixe, par exemple un brasage ou un soudage aux ultrasons, à l'unité électronique ou aux composants électriques, et qu'on soude l'autre extrémité du conducteur à un connecteur amovible.

6. Procédé selon au moins l'une des revendications précédentes, caractérisé en ce que l'établissement du contact des extrémités des conducteurs avec l'unité électronique (11, 11', 11") ou avec les composants électriques associés (12, 13, 14, 15, 16, 17, 18) s'effectue au moyen d'un automate de montage, la direction de montage (4) s'étendant essentiellement perpendiculairement au plan de la plaque de support (10).

7. Procédé selon au moins l'une des revendications précédentes, caractérisé en ce que le faisceau de câbles principal (a, a1) de l'unité électronique (11, 11') est réalisé selon la technique du multiplexage et est relié à un système électronique du véhicule ainsi qu'à une source d'énergie.

8. Procédé selon au moins l'une des revendications précédentes, caractérisé en ce que les extrémités (b1, c1, d1, e1) des conducteurs, qui sont associées à l'unité électronique (11'), d'au moins deux composants électriques sont réunies et positionnées dans un élément de retenue (5) avant d'être placées en contact avec la zone de contact prévue (110) de l'unité électronique (11').

9. Procédé selon au moins l'une des revendications précédentes, caractérisé en ce qu'après l'établissement des liaisons par conducteurs entre l'unité électronique (11, 11', 11") et les composants fonctionnels électriques (12, 13, 14, 15, 16, 17, 18), un contrôle de fonctionnement est effectué dans un dispositif de contrôle.

10. Procédé selon au moins l'une des revendications précédentes, caractérisé en ce que pour le contrôle du fonctionnement d'extrémités encore libres de conducteurs, qui ne sont pas encore reliées au composant électrique (par exemple le rétroviseur extérieur qui peut être réglé et chauffé électriquement), on raccorde ces extrémités de conducteur à des connecteurs de contrôle associés d'un dispositif de test et on exécute ensuite le processus de contrôle.
